# EUROPÄISCHE PATENTANMELDUNG

(11) **EP 0 697 240 A1**
(43) Veröffentlichungstag der Anmeldung: **21.02.1996**
(21) Anmeldenummer: 95113001.2
(22) Anmeldetag: 18.08.1995
(51) Int. Cl.: B01D 53/94, B01J 29/06

(54) **Katalysatoren zur Reduktion von Stickstoffoxiden**

(30) Priorität: 18.08.1994 FR 9410111
(71) Anmelder: Société Anonyme dite: REGIE NATIONALE DES USINES RENAULT, F-92109 Boulogne Billancourt (FR)
(72) Erfinder: Jacobs, Pierre A., B-Cooik 1755 (BE); Lievens, Ian, B-3000 Leuven (BE); Martens, Johan A., B-3040 Haldenberg (BE)

(57) **Abrégé**

Catalyseur supporté par un système zéolithique pour la réduction sélective d'oxydes d'azote par des hydrocarbures, caractérisé par le fait qu'il contient du gallium et de l'argent et que le rapport atomique Si/Al du système zéolithique est supérieur à 2.

## Beschreibung

L'invention concerne des catalyseurs à base de métaux nobles sur un support zéolithique pour la réduction sélective d'oxydes d'azote par des hydrocarbures.

Il est connu d'utiliser des catalyseurs à base de métaux nobles sur un support zéolithique afin de réaliser la réduction par des hydrocarbures, des oxydes d'azote contenus notamment dans les gaz d'échappement émis par des moteurs dits "pauvres". Cette réduction doit être sélective par rapport à une réaction d'oxydation avec l'oxygène en général présent dans de tels gaz dans des proportions allant jusqu'à 15% en volume.

En particulier il est connu d'utiliser des zéolithes d'argent ou des zéolithes de gallium, généralement des zéolithes Cu-ZSM-5, qui permettent la catalyse de la réaction de réduction des oxydes d'azote.
Cependant ces catalyseurs ne sont actifs qu'à haute température : aux environs de 400°C.

Par ailleurs des catalyseurs à base de métaux nobles, tels que le platine, supporté par de l'alumine peuvent également être utilisés pour la réduction des oxydes d'azote en utilisant du propène et de l'oxygène contenus dans les composants organiques en présence de vapeur d'eau. Mais le domaine de température dans lequel ils agissent est limité autour de 200°C.

L'invention a pour objet des catalyseurs de réduction des oxydes d'azote par des hydrocarbures, actifs sur une très large plage de températures et dont l'amorçage peut néanmoins être réalisé à basse température.

De tels résultats on été étonnement obtenus en utilisant comme support de catalyseur une zéolithe portant deux éléments : de l'argent et du gallium.
Ces éléments sont actifs sur des plages de température différentes cependant leur combinaison permet de façon surprenante d'obtenir les deux caractéristiques précitées.

Selon l'invention, le catalyseur contient du gallium et de l'argent et le rapport atomique Si/Al du système zéolithique est supérieur à 2.

Avantageusement, les teneurs en gallium et en argent sont comprises entre 0,1 et 10 % en poids.

Plus particulièrement, le rapport atomique Si/Al du système zéolithique est supérieur à 4.

Le procédé de préparation de tels catalyseurs est caractérisé en ce que le système zéolithique est traité d'une part par une solution contenant du gallium et d'autre part, par une solution contenant de l'argent de façon connue en soi par imprégnation ou échange.

Selon une autre caractéristique, les solutions peuvent être respectivement constituées par des solutions de sels de gallium et de sels d'argent.

Selon un mode de réalisation du procédé de préparation, le système zéolithique est simultanément traité par imprégnation ou échange par les deux solutions.

Selon une variante de ce mode de réalisation, le système zéolithique est successivement traité par imprégnation ou échange par chaque solution.

Selon un second mode de réalisation du procédé de préparation, le système zéolithique est cristallisé dans une première étape en présence de la solution contenant du gallium et le gallium est inséré dans la structure du système zéolithique, et dans une seconde étape le système zéolithique obtenu est imprégné ou échangé par la solution contenant de l'argent.

L'invention a également pour objet le procédé de réduction d'oxydes d'azote en présence de tels catalyseurs qui consiste à réduire sélectivement des oxydes d'azote contenus dans un mélange gazeux par des hydrocarbures dans une plage de température de 100°C à 600°C.

D'autres avantages et caractéristiques de l'invention apparaîtront à la lecture de la description et des exemples qui suivent.

Conformément à l'invention, on peut utiliser des zéolithes d'aluminosilicate ou contenant d'autres éléments de structure et leur combinaison.

La structure de la zéolithe n'a pas d'influence sur les performances catalytiques cependant elle peut être choisie de préférence parmi les structures ayant des canaux délimités par des cycles à 8 atomes d'oxygène ou plus, telles que les zéolithes de structure BEA, MFI, MOR, FER etc...

Par ailleurs, afin d'obtenir une bonne stabilité hydrothermique on choisira des zéolithes de rapport atomique Si/Al supérieur à 2, les zéolithes de rapport atomique Si/Al supérieur à 4 semblent particulièrement bien appropriées.

Cette zéolithe est dopée par du gallium et de l'argent dans des proportions de 0,1 à 10 % en poids. Pour des raisons économiques on cherchera à réaliser de bons catalyseurs contenant des teneurs minimales d'argent et de gallium.

La préparation d'un tel catalyseur peut être réalisée par des techniques classiques d'échange ou d'imprégnation. Précisons cependant que l'argent et le gallium peuvent être présents sous la forme de cations neutralisés dans la structure de la zéolithe ou sous forme d'oxydes ou d'autres espèces incluses dans la zéolithe.
Ainsi on pourra utiliser des solutions de nitrate de gallium et de nitrate d'argent.
Il est intéressant de noter que ces éléments peuvent être introduits simultanément ou successivement.

Une autre technique consiste à introduire l'élément Ga en utilisant une zéolithe contenant des atomes de Ga dans sa structure, grâce par exemple à la cristallisation d'une zéolithe en présence d'une solution contenant du gallium, et d'appliquer un traitement hydrothermique ou acide à cette dernière par lequel le gallium est délogé de ses positions de structure.
Le système zéolithique ainsi obtenu est alors imprégné ou échangé par une solution contenant de l'argent.

Enfin la charge de la structure de la zéolithe peut être équilibrée par des protons, des ions ammonium, des cations de métaux alcalins, alcalino-terreux ou terre-rares.

L'invention a également pour objet l'utilisation de tels catalyseurs pour la réduction sélective des oxydes d'azote contenus dans un mélange gazeux par des hydrocarbures dans une plage de température de 100°C à 600°C.
Pour ce faire on pourra utiliser un mélange d'hydrocarbures constitué par du propane et du propène.

Les exemples de préparation et d'application qui suivent permettent d'illustrer l'invention sans toutefois la limiter.

### EXEMPLE DE PREPARATION

Dans cet exemple, le système zéolithique est constitué par une zéolithe H-béta avec un rapport atomique Si/Al de 12,5 commercialisé par la société PQ de référence : CP-811-BL25.
Cette zéolithe est transformée en NH₄-béta par une mise en contact avec une solution diluée de NH₄OH.
Le système zéolithique NH₄-béta obtenu est alors imprégné avec une solution aqueuse de Ag(NO₃) et Ga(NO₃)₃ dans le but d'atteindre une teneur en Ag et Ga de respectivement 2% et 0,5% en poids.
La zéolithe est enfin séchée à 60°C et activée à 400°C dans un flux d'hélium contenant 15% de H₂O et 6% de O₂.

### EXEMPLE D'APPLICATION

Afin de comparer les actions respectives de zéolithes d'argent, zéolithes de gallium et zéolithes d'argent et de gallium, différents catalyseurs ont été préparés.
On a utilisé une zéolithe d'argent et de gallium préparée selon le procédé décrit ci -dessus. Les zéolithes respectivement d'argent et de gallium sont également préparées selon le même procédé en omettant respectivement l'ajout de solutions de nitrate de gallium et de nitrate d'argent.
On notera dans la suite ces catalyseurs :
A : pour le catalyseur NH₄-béta + 2%Ag,
B : pour NH₄-béta + 0,5% Ga,
et C : pour NH₄-béta +2%Ag+0,5%Ga.

Les trois catalyseurs ont été utilisés pour la réduction d'oxydes d'azote dans les mêmes conditions opératoires suivantes :

### Composition du mélange réactionnel

- 2 000 ppm de NO,
- 1 320 ppm d'hydrocarbures (mélange équimolaire propane /propène),
- 350 ppm CO,
- 6% O₂,
- 12%H₂O,
- 10% CO₂,
- et 2% d'argon dans de l'hélium utilisé comme gaz vecteur.

### Conditions opératoires

Pression : 0,1 MPa
Flux : 200ml/min
Lit catalytique constitué par 0,3 g de zéolithe

### Protocole opératoire

Le mélange réactionnel est mis en contact avec le lit catalytique dans les conditions précisées ci-dessus à différentes températures.

### Résultats

Les résultats du taux de conversion de NO en N₂ en fonction du catalyseur utilisé et de la température sont portés sur le tableau qui suit :

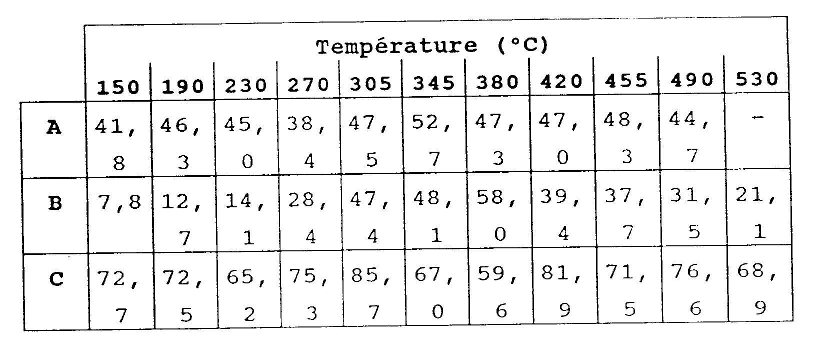

Ces résultats montrent clairement que sur l'ensemble de la plage de température, les résultats obtenus avec le catalyseur C contenant à la fois de l'argent et du gallium sont bien meilleurs que ceux obtenus avec les deux autres catalyseurs.
De plus, le taux de conversion de NO en N₂ obtenu avec le catalyseur C contenant de l'argent et du gallium, est très bon et régulier quelque soit la température.

Différents tests comparatifs résumés dans la tableau suivant, montrent l'effet important de la structure zéolithique sur la réduction du NO en N₂, en particulier à basse et moyenne température (200-350°C) par rapport à un support tel que l'alumine.

Pour des conditions de prétraitement et de tests identiques (b) et (c), le catalyseur Ag-Ga/zéolithe (où zéolithe = Mordénite) montre une activité entre 200 et 350°C bien supérieure à Ag-Ga/Alumine.

Sur un support zéolithe, la conversion des NOx en N₂ démarre dès 150°C, parallèlement à une légère disparition du propane, qui est retenu dans les pores de la zéolithe.

Avec l'alumine, il n'y a aucune transformation de l'hydrocarbure avant 350°C, température à laquelle démarre la conversion des NOx en N₂.

La Mordénite permet de retenir les hydrocarbures à basse température, et elle retarde leur combustion totale au-delà de 500°C. Ainsi, la réduction des NOx a lieu sur une large plage de température de 200°C à 450°C, températures nécessaires pour l'application Diesel.

Un prétraitement réducteur sous H₂, n'apporte aucune amélioration de l'activité du catalyseur Ag-Ga/Alumine (conditions (a) (c) par rapport à (b) (c).

La modification des conditions de test (d) permet de comparer ces résultats avec ceux précédemment obtenus dans le programme JRC.

Elle permet aussi de mettre en évidence le rôle de l'hydrocarbure dans la réaction de réduction des NOx. En effet, un mélange propane (propène amène à une oxaltation de l'activité de AG-Ga/Mordénite). Le propène est une meilleur réducteur que le propane, mais il est convertit à plus basse température. Il favorise donc la réduction des NOx aux températures inférieures à 400°C.

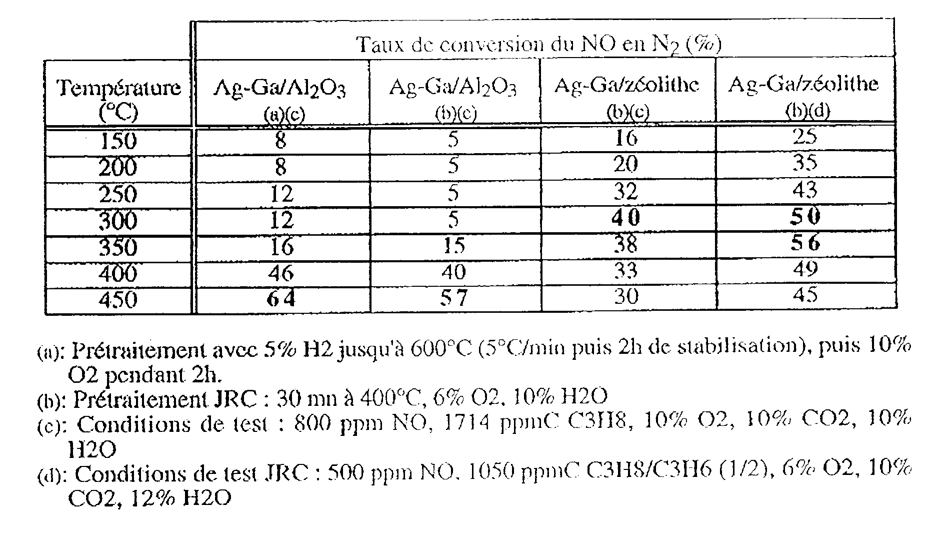

## Revendications

**1)** Catalyseur supporté par un système zéolithique pour la réduction sélective d'oxydes d'azote par des hydrocarbures, caractérisé par le fait qu'il contient du gallium et de l'argent et que le rapport atomique Si/Al du système zéolithique est supérieur à 2.

**2)** Catalyseur selon la revendication 1, caractérisé par le fait que les teneurs en gallium et en argent sont comprises entre 0,1 et 10 % en poids.

**3)** Catalyseur selon l'une quelconque des revendications 1 ou 2, caractérisé par le fait que le rapport atomique Si/Al du système zéolithique est supérieur à 4.

**4)** Procédé de préparation du catalyseur selon l'une quelconque des revendications 1 à 3, caractérisé en ce que le système zéolithique est traité d'une part par une solution contenant du gallium et d'autre part, par une solution contenant de l'argent de façon connue en soi par imprégnation ou échange.

**5)** Procédé selon la revendication 4, caractérisé par le fait que les solutions sont respectivement constituées par des solutions de sels de gallium et de sels d'argent.

**6)** Procédé selon l'une quelconque des revendications 4 ou 5, caractérisé en ce que le système zéolithique est simultanément traité par imprégnation ou échange par les deux solutions.

**7)** Procédé selon l'une quelconque des revendications 4 ou 5, caractérisé par le fait que le système zéolithique est successivement traité par imprégnation ou échange par chaque solution.

**8)** Procédé selon la revendication 4 ou 5, caractérisé par le fait que le système zéolithique est cristallisé dans une première étape en présence de la solution contenant du gallium et que le gallium est inséré dans la structure du système zéolithique, et que dans une seconde étape le système zéolithique obtenu est imprégné ou échangé par la solution contenant de l'argent.

**9)** Procédé de réduction d'oxydes d'azote en présence d'un catalyseur selon l'une quelconque des revendications 1 à 3, caractérisé en ce qu'il consiste à réduire sélectivement des oxydes d'azote contenus dans un mélange gazeux par des hydrocarbures dans une plage de température de 100°C à 600°C.
